# EUROPEAN PATENT APPLICATION

(11) **EP 4 601 036 A1**
(43) Date of publication of application: **13.08.2025**
(21) Application number: 24866854.3
(22) Date of filing: 30.04.2024
(51) Int. Cl.: H01M 4/38, H01M 4/36, H01M 10/052, H01M 4/62, H01M 4/133, H01M 4/134

(54) **NEGATIVE ELECTRODE MATERIAL, NEGATIVE ELECTRODE SLURRY, AND LITHIUM ION BATTERY**

(30) Priority: 22.09.2023 CN 202311231152
(71) Applicant: BTR New Material Group Co., Ltd., Shenzhen, Guangdong 518106 (CN); Dingyuan New Energy Technology Co., Ltd., Huizhou, Guangdong 516227 (CN)
(72) Inventor: QU, Lijuan, Shenzhen, Guangdong 518106 (CN); PANG, Chunlei, Shenzhen, Guangdong 518106 (CN); XIE, Wei, Shenzhen, Guangdong 518106 (CN); REN, Jianguo, Shenzhen, Guangdong 518106 (CN); HE, Xueqin, Shenzhen, Guangdong 518106 (CN)
(74) Representative: Studio Torta S.p.A.
(86) International application number: PCT/CN2024/090883
(87) International publication number: WO 2025/060430

(57) **Abstract**

The present application relates to an anode material, a preparation method therefor and a lithium-ion battery. The anode material includes a silicon-based active substance and a coating layer located on at least a partial surface of the silicon-based active substance, and the silicon-based active substance includes silicon and a lithium silicate. According to the anode material of the present application, by controlling the type and crystallization degree of the lithium silicate in the material, the storage stability of a negative electrode paste can be improved, the cycle life of the anode material is prolonged, the bonding ability of the anode material and a current collector is increased, the high-temperature storage performance of a cell is improved, and thus the cycle performance of the lithium-ion battery is improved.

## Description

The present application claims the priority of a Chinese patent application No. 202311231152.8, filed to China National Intellectual Property Administration on September 22, 2023, with the title of "Anode material, Preparation Method therefor and Lithium-ion Battery", the entire contents of which are incorporated herein by reference.

### Technical Field

The present application relates to the technical field of anode materials, in particular to an anode material, a negative electrode paste and a lithium-ion battery.

### Background

Lithium-ion batteries, due to the advantages of high operating voltage, long cycle service life, no memory effect, low self-discharge, environmental friendliness, etc., have been widely used in portable electronic products and electric vehicles. Currently, graphite type anode materials are mainly used for commercial lithium-ion batteries, but graphite has a theoretical specific capacity of up to 372 mAh/g, and thus cannot meet needs of the lithium-ion batteries for high energy density in the future. Although having a theoretical capacity of up to 4,200 mAh/g, existing Si has an expansion rate of 300%, such that cycle performance is affected, leading to restrictions in promotion and application on the market. Corresponding silicon-oxygen materials have better cycle performance, but low initial efficiency. During first charging, 20%-50% of lithium needs to be consumed for forming an SEI membrane, which greatly reduces the initial coulombic efficiency. With increase of the initial efficiency of cathode materials, it is particularly important to improve the initial efficiency of the silicon-oxygen materials.

Currently, an effective way to improve the initial efficiency of the silicon-oxygen materials includes doping lithium in advance, so as to consume the irreversible lithium in the silicon-oxygen materials in advance. An existing industrial method includes directly coating a surface of an electrode plate with a lithium layer, so as to achieve the effect of reducing lithium consumption. However, the method has high requirements on an operating environment and great potential safety hazards, and thus is difficult to realize industrial promotion.

In a current technological development state, prelithiation at a silicon-oxygen material end to improve the initial efficiency generally has the problem of poor processing performance, which is mainly manifested as follows: pastes prepared from prelithiated silicon-oxygen anode materials have a short stable storage time and are prone to settling, stratification, and gas production in a storage process, such that active substances are unevenly distributed in coated electrode plates, the electrode plates have great differences in thickness and surface density and have uneven appearances, and thus assembly of full batteries cannot be performed; a prelithiation degree is difficult to control, such that the types and contents of lithium silicates in the silicon-oxygen materials are unstable, the pastes prepared are unstable, the coated electrode plates are easily uneven, the peeling strength of the electrode plates is further reduced, and the active substances are easily peeled off from current collectors; and meanwhile, due to the introduction of lithium sources and the generation of lithium silicates in the prelithiated silicon-oxygen materials, original stable structures of the silicon-oxygen materials are broken, and the cycle life of the anode materials is shortened.

### SUMMARY

In a first aspect, the present application provides an anode material, a negative electrode paste and a lithium-ion battery. The anode material includes a silicon-based active substance and a coating layer located on at least a partial surface of the silicon-based active substance, and the silicon-based active substance includes silicon and a lithium silicate;
as determined by an XRD ray diffraction method, in an X-ray diffraction spectrum of the anode material, a peak intensity of a strongest diffraction peak of the anode material in a 2θ range of 18° to 20° is A1, a peak intensity of a strongest diffraction peak in a 2θ range of 26° to 27.9° is A2, a peak intensity of a strongest diffraction peak in a 2θ range of 32° to 34° is A3, and A1+A2+A3 is equal to A;
a peak intensity of a strongest diffraction peak of the anode material in a 2θ range of 16° to 17° is B1, a peak intensity of a strongest diffraction peak in a 2θ range of 22° to 25.9° is B2, a peak intensity of a strongest diffraction peak in a 2θ range of 36° to 38° is B3, and B1+B2+B3 is equal to B;
a peak intensity of a strongest diffraction peak of the anode material in a 2θ range of 28° to 30° is C1, a peak intensity of a strongest diffraction peak in a 2θ range of 46° to 48° is C2, a peak intensity of a strongest diffraction peak in a 2θ range of 56° to 58° is C3, and C1+C2+C3 is equal to C;
and a relationship between the A, the B, and the C meets: 0<(A+B)/C≤10 and 0<(A+C)/B≤5.

In some embodiments, the anode material is tested by using a powder resistivity tester, the anode material is tested to have a powder conductivity of σ1 at a powder density of ρ1, the anode material is tested to have a powder conductivity of σ2 at a powder density of p2, and a following relationship is met: (σ2-σ1)/(ρ2-ρ1)≤0.8.

In some embodiments, the relationship between the A, the B, and the C further meets: 1≤(B+C)/A≤30.

In some embodiments, the silicon-based active substance further includes a silicon-oxygen complex.

In some embodiments, a molar ratio of oxygen atoms to silicon atoms in the anode material is 0.5-2.

In some embodiments, the silicon includes nano-silicon grains, and an average particle size of the nano-silicon grains is 0 nm-20 nm excluding 0 nm.

In some embodiments, the coating layer includes a carbon material, and the carbon material includes at least one of amorphous carbon, graphene, graphite, carbon nanotubes, and carbon fibers.

In some embodiments, the lithium silicate includes at least one of Li₂SiO₃, Li₂Si₂O₅, and Li₄SiO₄.

In some embodiments, the coating layer includes a carbon material, and a mass content of the carbon material in the anode material is equal to or less than 10%.

In some embodiments, a mass content of the silicon in the anode material is 20%-70%.

In some embodiments, a mass content of the lithium silicate in the anode material is 30%-75%.

In some embodiments, a specific surface area of the anode material is equal to or less than 10 m²/g.

In some embodiments, a pH value of the anode material is 7.2-11.0.

In some embodiments, an active material, carboxymethyl cellulose, conductive carbon black, and styrene butadiene rubber are mixed at a mass ratio of 95.3:1.3:1.5:1.9 to form a negative electrode paste with a solid content of 50%, wherein the active material includes the anode material and graphite at a mass ratio of 9:1; a rheological property of the negative electrode paste is tested by using an HAAKE rotational rheometer of German to obtain a rheological curve of the negative electrode paste; and in the rheological curve, when shearing rates are 0 S⁻¹, 150 S⁻¹, and 300 S⁻¹, corresponding shearing stresses in the rheological curve are τ0, τ1, and τ2, and a relationship between the shearing stresses meets: 2τ1>(τ2-τ0).

In a second aspect, the present application provides a negative electrode paste, including the anode material as described in the first aspect.

In a third aspect, the present application provides a preparation method for an anode material, including the following steps:
placing a silicon oxide (SiOx) in an acid solution for first surface modification treatment, wherein x is greater than 0 and less than 2;
subjecting a mixture containing the silicon oxide (SiOx) after the first surface modification treatment and a reducing lithium-containing compound to prelithiation treatment at 300°C-800°C and carbon coating treatment to obtain a precursor, wherein the x is greater than 0 and less than 2; and
subjecting the precursor to second surface modification treatment to obtain an anode material, wherein the anode material includes a silicon-based active substance and a coating layer located on at least a partial surface of the silicon-based active substance, and the silicon-based active substance includes silicon and a lithium silicate.

In some embodiments, the acid solution includes at least one of hydrofluoric acid, nitric acid, fluorosulfonic acid, magic acid, hydrochloric acid, hydrobromic acid, and hydroiodic acid.

In some embodiments, a concentration of the acid solution is equal to or less than 2 mol/L.

In some embodiments, a temperature of the first surface modification treatment is 30°C-100°C.

In some embodiments, a time of the first surface modification treatment is 2 h-8 h.

In some embodiments, the preparation method further includes subjecting the silicon oxide (SiOx) after the first surface modification treatment to solid-liquid separation, washing, and drying treatment.

In some embodiments, the preparation method further includes subjecting the silicon oxide (SiOx) after the first surface modification treatment to solid-liquid separation, washing, and drying treatment, and a temperature of the drying is 50°C-180°C.

In some embodiments, the silicon oxide is silicon monoxide.

In some embodiments, the reducing lithium-containing compound includes at least one of lithium hydride, lithium alkylide, metallic lithium, lithium aluminum hydride, lithium amide, lithium borohydride, and a lithium-silicon alloy.

In some embodiments, a mass ratio of the silicon oxide after the first surface modification treatment to the reducing lithium-containing compound is 1:(0.03-0.2).

In some embodiments, the prelithiation treatment is performed in a protective atmosphere.

In some embodiments, the protective atmosphere includes at least one of nitrogen, helium, neon, argon, krypton, and xenon.

In some embodiments, a time of the prelithiation treatment is 3 h-9 h.

In some embodiments, the coating treatment includes carbon coating treatment, and a process of the carbon coating treatment includes at least one of a liquid-phase coating method, a gas-phase coating method, and a solid-phase coating method.

In some embodiments, the coating treatment includes carbon coating treatment, and a coating material of the carbon coating treatment includes at least one of amorphous carbon, graphene, graphite, carbon nanotubes, and carbon fibers.

In some embodiments, the lithium silicate includes at least one of Li₂SiO₃, Li₂Si₂O₅, and Li₄SiO₄.

In some embodiments, before subjecting the mixture containing the silicon oxide (SiOx) after the first surface modification treatment and the reducing lithium-containing compound to the prelithiation treatment at 300°C-800°C, the method further includes subjecting the mixture containing the silicon oxide (SiOx) after the first surface modification treatment and the reducing lithium-containing compound to mixing treatment.

In some embodiments, a temperature of the mixing treatment is 60°C -320°C.

In some embodiments, a time of the mixing treatment is 0.5 h-10 h.

In some embodiments, a device required for the mixing treatment includes at least one of a device having a dispersion function or a device having a shearing force effect.

In some embodiments, the second surface modification treatment includes at least one of purification treatment, coating treatment, heat treatment, oxidation treatment, and etching treatment.

In some embodiments, a temperature of the second surface modification treatment is 50°C-900°C.

In some embodiments, a time of the second surface modification treatment is 0.5 h-10 h.

In some embodiments, the second surface modification treatment includes placing the precursor in an aluminum hydroxide solution for purification treatment.

In a fourth aspect, the present application provides a lithium-ion battery. The lithium-ion battery includes the anode material described in the first aspect or an anode material prepared by the preparation method described in the second aspect.

Compared with the prior art, technical solutions of the present application at least have the following beneficial effects.

The anode material provided in the present application includes the silicon-based active substance, and the silicon-based active substance includes the silicon and the lithium silicate. As determined by the XRD ray diffraction method, in the X-ray diffraction spectrum of the anode material, A represents a sum of peak intensities of different peak positions of Li₂SiO₃ in a crystalline state, B represents a sum of peak intensities of different peak positions of Li₂Si₂O₅ in a crystalline state, and C represents a sum of peak intensities of different peak positions of the silicon. When the relationship between the A, the B, and the C meets 0<(A+B)/C≤10 and 0<(A+C)/B≤5, the three components, including the Li₂SiO₃, the Li₂Si₂O₅, and the silicon, in the anode material interact with each other and achieve a balance. The surface of the anode material has an appropriate lithiation degree, such that the anode material has relatively stable processing performance, and the anode material has good interface contact with a binder glue solution. When the anode material is prepared into a negative electrode paste, the anode material can be evenly dispersed and suspended in the binder glue solution, such that the prepared negative electrode paste can be stably stored. In addition, in a charge and discharge process of a battery containing the anode material, a destruction effect of the lithium silicate on a binder can also be reduced, thereby improving the structural stability of an electrode plate and prolonging the cycle life of the anode material. According to the anode material provided in the present application, by regulating and controlling the type and crystallization degree of the lithium silicate, namely meeting the relationship between the A, the B, and the C, a destruction effect of an alkaline substance on a binder is reduced, the structural stability of an electrode plate is improved, the cycle performance of a battery prepared from the anode material is improved, and the cycle life is prolonged.

According to the preparation method for an anode material provided in the present application, by placing the silicon oxide (SiOx) in the acid solution for the first surface modification treatment, the surface of the silicon oxide (SiOx) is subjected to oxidation and etching with the acid solution to form weak defect sites on the surface of the silicon oxide (SiOx), such that reaction sites in a prelithiation process of the silicon oxide (SiOx) after the surface modification treatment can be increased, a prelithiation reaction is promoted to be more uniform, more lithium silicate growth sites are obtained, convenience is provided for even distribution of the lithium silicate in particles of the anode material, and adjustment of the crystal phase type and content of the lithium silicate on a surface layer of the material is facilitated. In addition, by subjecting the silicon oxide (SiOx) after the surface modification treatment to the prelithiation treatment, catalytic growth of silicon grains from the lithium silicate can be greatly reduced. Since the surface of the silicon oxide (SiOx) after the first surface modification has evenly distributed growth sites, by subjecting the mixture containing the silicon oxide (SiOx) after the first surface modification treatment and the reducing lithium-containing compound to the prelithiation treatment, the utilization rate of lithium and the distribution uniformity of a prelithiation product can be improved, the prelithiation product is evenly distributed in the anode material, and convenience is provided for buffering the volume change of the silicon-based active substance in a charge and discharge process, maintaining and stabilizing the overall structure of the anode material, prolonging the cycle life, reducing the regeneration of an SEI membrane on the surface of the anode material, and improving the initial efficiency of the material. By subjecting the precursor to the second surface modification treatment, the surface morphology of the anode material can be continuously adjusted, and the crystal phase type and content of the lithium silicate on the surface layer of the material are adjusted. On the one hand, a solid-liquid contact interface between the anode material and an electrolyte can be stabilized to reduce the risk of erosion of the anode material in the electrolyte and improve the high-temperature storage performance of a battery prepared from the anode material. On the other hand, the bonding strength of a binder to the anode material can be improved to enhance the peeling strength of an electrode plate, reduce the rebound of the electrode plate, and stabilize a conductive network of the electrode plate, so as to improve the cycle life of a battery prepared from the anode material.

### Brief Description of the Drawings

The present application is further described below in conjunction with accompanying drawings and embodiments.
Fig. 1 is a process flow chart of a preparation method for an anode material provided in the present application; and
Fig. 2 shows a relationship between the power density and powder conductivity of an anode material prepared in Example 1 of the present application.

### Detailed Description of the Embodiments

In order to make the technical solutions of the present application better understood, the embodiments of the present application are described in detail below in conjunction with the accompanying drawings.

It should be clear that the embodiments described are merely a part of the embodiments of the present application, rather than all of the embodiments. Based on the embodiments of the present application, all other embodiments obtained by those of ordinary skill in the art without exerting creative effort fall within the scope of protection of the present application.

Terms used in the embodiments of the present application are only for the purpose of describing specific embodiments and are not intended to limit the present application. The terms "a", "said", and "the" in a singular form used in the embodiments and attached claims of the present application are also intended to include plural references, unless other meanings are clearly indicated in the context.

It should be understood that the term "and/or" used herein merely shows an association relationship describing associated objects, indicating that three kinds of relationships may present. For example, A and/or B may be expressed in three situations, including separate presence of A, simultaneous presence of A and B, and separate presence of B. In addition, the character "/" herein generally means that former and latter associated objects have an "or" relationship.

In a first aspect, the present application provides an anode material. The anode material includes a silicon-based active substance and a coating layer located on at least a partial surface of the silicon-based active substance, and the silicon-based active substance includes silicon and a lithium silicate;
as determined by an XRD ray diffraction method, in an X-ray diffraction spectrum of the anode material, a peak intensity of a strongest diffraction peak of the anode material in a 2θ range of 18° to 20° is A1, a peak intensity of a strongest diffraction peak in a 2θ range of 26° to 27.9° is A2, a peak intensity of a strongest diffraction peak in a 2θ range of 32° to 34° is A3, and A1+A2+A3 is equal to A;
a peak intensity of a strongest diffraction peak of the anode material in a 2θ range of 16° to 17° is B1, a peak intensity of a strongest diffraction peak in a 2θ range of 22° to 25.9° is B2, a peak intensity of a strongest diffraction peak in a 2θ range of 36° to 38° is B3, and B1+B2+B3 is equal to B;
a peak intensity of a strongest diffraction peak of the anode material in a 2θ range of 28° to 30° is C1, a peak intensity of a strongest diffraction peak in a 2θ range of 46° to 48° is C2, a peak intensity of a strongest diffraction peak in a 2θ range of 56° to 58° is C3, and C1+C2+C3 is equal to C;
and a relationship between the A, the B, and the C meets: 0<(A+B)/C≤10 and 0<(A+C)/B≤5.

The anode material provided in the present application includes the silicon-based active substance, and the silicon-based active substance includes the silicon and the lithium silicate. As determined by the XRD ray diffraction method, in the X-ray diffraction spectrum of the anode material, A represents a sum of peak intensities of different peak positions of Li₂SiO₃ in a crystalline state, B represents a sum of peak intensities of different peak positions of Li₂Si₂O₅ in a crystalline state, and C represents a sum of peak intensities of different peak positions of the silicon. When the relationship between the A, the B, and the C meets 0<(A+B)/C≤10 and 0<(A+C)/B≤5, the three components, including the Li₂SiO₃, the Li₂Si₂O₅, and the silicon, in the anode material interact with each other and achieve a balance. The surface of the anode material has an appropriate lithiation degree, such that the anode material has relatively stable processing performance, and the anode material has good interface contact with a binder glue solution. When the anode material is prepared into a negative electrode paste, the anode material can be evenly dispersed and suspended in the binder glue solution, such that the prepared negative electrode paste can be stably stored. In addition, in a charge and discharge process of a battery containing the anode material, a destruction effect of the lithium silicate in the anode material on a binder can also be reduced, thereby improving the structural stability of an electrode plate and prolonging the cycle life of the material. According to the anode material provided in the present application, by regulating and controlling the type and crystallization degree of the lithium silicate, namely meeting the relationship between the A, the B, and the C, a destruction effect of an alkaline substance on a binder is reduced, the structural stability of an electrode plate is improved, the cycle performance of a battery prepared from the anode material is improved, and the cycle life is prolonged.

Specifically, the value of (A+B)/C may be, for example, 1, 1.5, 2, 2.5, 3, 3.5, 4, 4.5, 5, 5.5, 6, 6.5, 7, 7.5, 8, 8.5, 9, 9.5, and 10, etc., and certainly may also be other values in the above range, which is not limited herein. The value of (A+C)/B may be, for example, 1, 1.5, 2, 2.5, 3, 3.5, 4, 4.5, and 5, etc., which is not limited herein.

In some embodiments, the relationship between the A, the B, and the C further meets: 1≤(B+C)/A≤30. Specifically, the value of (B+C)/A may be, for example, 1, 3, 5, 8, 10, 12, 15, 17, 20, 21, 23, 25, 28, and 30, etc., and certainly may also be other values in the above range, which is not limited herein.

It may be understood that the three components, including the Li₂SiO₃ represented by the A, the Li₂Si₂O₅ represented by the B, and the silicon represented by the C are distributed in the anode material. Meanwhile, when 1≤(B+C)/A≤30 is met, the storage performance of a negative electrode paste prepared from the anode material is improved, and the phenomena of settling, stratification, and gas production of the negative electrode paste in a storage process are reduced, such that the active substance is evenly distributed in a coated electrode plate, the electrode plate has small differences in thickness and surface density and has a smooth appearance, and the electrode plate is suitable for assembly of a full battery.

In some embodiments, the anode material is tested by using a powder resistivity tester, the anode material is tested to have a powder conductivity of *σ*1 at a powder density of ρ1, the anode material is tested to have a powder conductivity of *σ*2 at a powder density of ρ2, and a following relationship is met: (σ2-σ1)/(ρ2-ρ1)≤0.8. Specifically, the value of (σ2-σ1)/(ρ2-ρ1) may be, for example, 0.01, 0.05, 0.1, 0.2, 0.3, 0.4, 0.5, 0.6, 0.7, and 0.8, etc., and certainly may also be other values in the above range, which is not limited herein. The powder density p1 and the powder conductivity σ1 as well as the powder density ρ2 and the powder conductivity σ2 are tested at different pressures, respectively.

It may be understood that the powder conductivity is related to the apparent morphology and internal structure of the anode material, which can reflect the electronic conductivity of the anode material. Due to increase of the lithium silicate in the silicon-based active material after prelithiation treatment, the overall electronic conductivity of the anode material may be reduced. The powder conductivity of the anode material is changed with changes of the powder density. In the present application, by controlling a balance relationship between the three components, including the Li₂SiO₃, the Li₂Si₂O₅, and the silicon, a relationship between the powder conductivity and the powder density can be correspondingly balanced, electrical contact between particles of the anode material is ensured, the stability of a conductive network between the particles of the anode material is improved, the probability of electrical contact between the particles in a cycle process is increased, and the cycle life of the material is prolonged.

In some embodiments, a molar ratio of oxygen atoms to silicon atoms in the anode material is 0.5-2, may be specifically 0.5, 0.6, 0.7, 0.8, 0.9, 1, 1.1, 1.2, 1.3, 1.4, 1.5, 1.6, 1.7, 1.8, 1.9, and 2, etc., and certainly may also be other values in the above range, which is not limited herein.

In some embodiments, the silicon-based active substance further includes a silicon-oxygen complex, the silicon-oxygen complex includes oxygen atoms and silicon atoms, and a molar ratio of the oxygen atoms to the silicon atoms is 0-2. The silicon-oxygen complex may be expressed by a general formula of SiOx (0<x≤2). The complex may be a material formed by dispersing silicon particles in SiO₂, or may be a material with a tetrahedral structural unit. The silicon atoms are located in the center of the tetrahedral structural unit, and the silicon atoms and the oxygen atoms are located at four vertexes of the tetrahedral structural unit.

In some embodiments, the silicon includes nano-silicon grains, and an average particle size of the nano-silicon grains is 0 nm -20 nm excluding 0 nm. Specifically, the average particle size of the nano-silicon grains may be 1 nm, 3 nm, 5 nm, 8 nm, 10 nm, 12 nm, 15 nm, and 20 nm, etc., and certainly may also be other values in the above range, which is not limited herein. It may be understood that in the case of a same silicon content, compared with large-size crystalline silicon grains, due to the isotropy of expansion of silicon, small-size silicon grains have more uniform expansion stress, a smaller expansion effect and a longer cycle life, thereby being conducive to improving the cycle performance and rate performance of the anode material.

In some embodiments, the coating layer includes a carbon material, and the carbon material includes at least one of amorphous carbon, graphene, graphite, carbon nanotubes, and carbon fibers.

In some embodiments, the lithium silicate includes at least one of Li₂SiO₃, Li₂Si₂O₅, and Li₄SiO₄.

In some embodiments, the coating layer includes a carbon material, and a mass content of the carbon material in the anode material is equal to or less than 10%, may be specifically 0.1%, 1%, 2%, 3%, 5%, 7%, 8%, 9%, and 10%, and certainly may also be other values in the above range, which is not limited herein.

In some embodiments, a specific surface area of the anode material is equal to or less than 10 m²/g, may be specifically 1 m²/g, 2 m²/g, 3 m²/g, 4 m²/g, 5 m²/g, 6 m²/g, 7 m²/g, 8 m²/g, 9 m²/g, and 10m²/g, etc., and certainly may also be other values in the above range, which is not limited herein.

In some embodiments, a mass content of the silicon in the anode material is 20%-70%, may be specifically 20%, 24%, 28%, 30%, 35%, 40%, 48%, 52%, 56%, 60%, 63%, 65%, 67%, and 70%, etc., and certainly may also be other values in the above range, which is not limited herein.

In some embodiments, a mass content of the silicate in the anode material is 30%-75%, may be specifically 30%, 32%, 35%, 38%, 40%, 45%, 50%, 56%, 60%, 64%, 67%, 70%, 72%, 73%, and 75%, etc., and certainly may also be other values in the above range, which is not limited herein.

In some embodiments, a pH value of the anode material is 7.2-11.0. The pH value of the anode material may be specifically 7.2, 7.6, 7.8, 8, 8.3, 8.5, 8.7, 9.6, 9.9, 10, 10.25, 10.36, 10.47, 10.58, 10.87, 10.98, and 11, etc., and certainly may also be other values in the above range, which is not limited herein.

In some embodiments, an active material, carboxymethyl cellulose, conductive carbon black, and styrene butadiene rubber are mixed at a mass ratio of 95.3:1.3:1.5:1.9 to form a negative electrode paste with a solid content of 50%, wherein the active material includes the anode material and graphite at a mass ratio of 9:1; a rheological property of the negative electrode paste is tested by using an HAAKE rotational rheometer of German to obtain a rheological curve of the negative electrode paste; and in the rheological curve, when shearing rates are 0 S⁻¹, 150 S⁻¹, and 300 S⁻¹, corresponding shearing stresses in the rheological curve are τ0, τ1, and τ2, and a relationship between the shearing stresses meets: 2τ1>(τ2-τ0).

It may be understood that the relationship between the shearing stresses in the rheological curve of the negative electrode paste is related to the leveling performance, sagging performance and settling performance of the anode material. By limiting the relationship, the storage stability of the anode material in the negative electrode paste can be improved. By limiting the shearing rate-shearing stress, the fluidity and stability of the paste of the anode material can be improved, thereby increasing the uniformity and consistency of an electrode plate, increasing the bonding strength between the active substance and a current collector, and reducing the active substance falling from the current collector. When the rheological curve meets the above formula, the anode material has anti-settling performance, good anti-sagging performance and great storage stability. In addition, the active material on an electrode plate can be evenly attached to a current collector, which is conducive to improving the peeling strength of the electrode plate. When 2τ1≤(τ2-τ0) is met, the anode material in the negative electrode paste is prone to settling, trailing, and stratification, which is not conducive to coating of an electrode plate and will reduce the consistency of a battery.

In a second aspect, the present application provides a negative electrode paste, including the anode material as described in the first aspect. In some embodiments, the negative electrode paste is formed by mixing an active material, carboxymethyl cellulose, conductive carbon black, and styrene butadiene rubber at a mass ratio of 95.3:1.3:1.5:1.9, wherein the active material includes the anode material and graphite at a mass ratio of 9:1; a rheological property of the negative electrode paste is tested by using an HAAKE rotational rheometer of German to obtain a rheological curve of the negative electrode paste; and in the rheological curve, when shearing rates are 0 S⁻¹, 150 S⁻¹, and 300 S⁻¹, corresponding shearing stresses in the rheological curve are τ0, τ1, and τ2, and a relationship between the shearing stresses meets: 2τ1>(τ2-τ0).

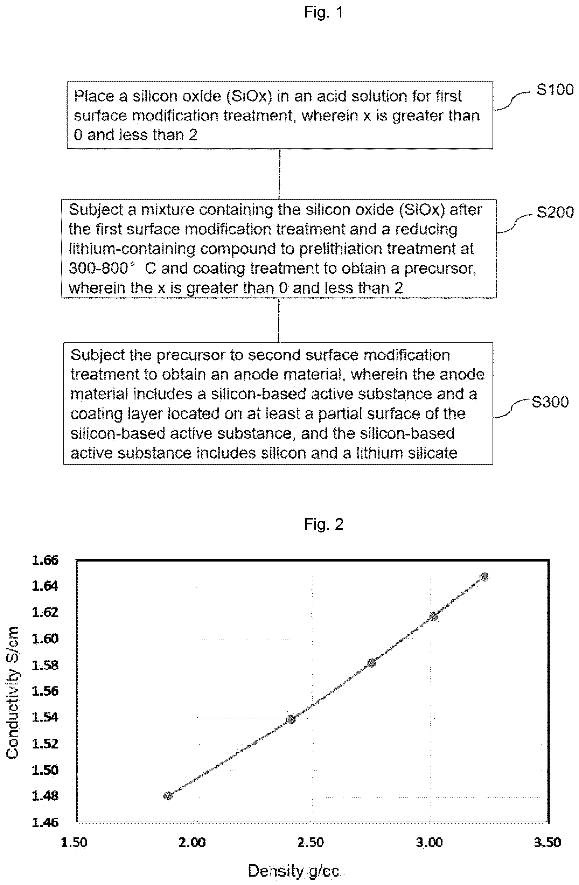

In a third aspect, the present application provides a preparation method for an anode material. As shown in Fig. 1, the preparation method includes the following steps:
S100, placing a silicon oxide (SiOx) in an acid solution for first surface modification treatment, wherein x is greater than 0 and less than 2;
S200, subjecting a mixture containing the silicon oxide (SiOx) after the first surface modification treatment and a reducing lithium-containing compound to prelithiation treatment at 300°C -800°C and coating treatment to obtain a precursor, wherein the x is greater than 0 and less than 2; and
S300, subjecting the precursor to second surface modification treatment to obtain an anode material, wherein the anode material includes a silicon-based active substance and a coating layer located on at least a partial surface of the silicon-based active substance, and the silicon-based active substance includes silicon and a lithium silicate.

According to the preparation method for an anode material provided in the present application, by placing the silicon oxide (SiOx) in the acid solution for the first surface modification treatment, the surface of the silicon oxide (SiOx) is subjected to oxidation and etching with the acid solution to form weak defect sites on the surface of the silicon oxide (SiOx), such that reaction sites in a prelithiation process of the silicon oxide (SiOx) after the first surface modification treatment can be increased, a prelithiation reaction is promoted to be more uniform, more lithium silicate growth sites are obtained, convenience is provided for even distribution of the lithium silicate in particles, and adjustment of the crystal phase type and content of the lithium silicate on a surface layer of the material is facilitated. In addition, by subjecting the silicon oxide (SiOx) after the surface modification treatment to the prelithiation treatment, catalytic growth of silicon grains from the lithium silicate can be greatly reduced, so as to adjust the types, contents and grain growth situations of the three components, including the Li₂SiO₃, the Li₂Si₂O₅, and the silicon, in the anode material. Since the surface of the silicon oxide (SiOx) after the first surface modification has evenly distributed growth sites, by subjecting the mixture containing the silicon oxide (SiOx) after the first surface modification treatment and the reducing lithium-containing compound to the prelithiation treatment, the utilization rate of lithium and the distribution uniformity of a prelithiation product can be improved, the prelithiation product is evenly distributed in the anode material, and convenience is provided for buffering the volume change of the silicon-based active substance in a charge and discharge process, maintaining and stabilizing the overall structure of the anode material, prolonging the cycle life, reducing the regeneration of an SEI membrane on the surface of the anode material, and improving the initial efficiency of the material. By subjecting the precursor to the second surface modification treatment, the surface morphology of the anode material can be continuously adjusted, and the crystal phase type and content of the lithium silicate on the surface layer of the material are adjusted. On the one hand, a solid-liquid contact interface between the anode material and an electrolyte can be stabilized to reduce the risk of erosion of the anode material in the electrolyte and improve the high-temperature storage performance of a battery. On the other hand, the bonding strength of a binder to the anode material can be improved to enhance the peeling strength of an electrode plate, reduce the rebound of the electrode plate, and stabilize a conductive network of the electrode plate, so as to improve the cycle life of a battery prepared from the anode material.

The preparation method provided in the solution is introduced in detail below.

In step S100, a silicon oxide (SiOx) is placed in an acid solution for first surface modification treatment, wherein x is greater than 0 and less than 2.

In some embodiments, the silicon oxide is SiOx, wherein x is greater than 0 and less than 2, and the SiOx may be specifically SiO_{0.5}, SiO_{0.7}, SiO, SiO_{1.2}, SiO_{1.4}, SiO_{1.6}, SiO_{1.8}, and SiO_{1.9}, etc., which is not limited herein. It should be noted that the SiOx is relatively complex in composition and may be understood as being formed by evenly dispersing at least one of amorphous silicon and crystalline silicon in SiO₂. At a high temperature, the silicon oxide has extremely unstable thermodynamic properties and easily undergoes a reduction reaction with a lithium source to generate a lithium silicate.

In some embodiments, the acid solution includes at least one of hydrofluoric acid, nitric acid, fluorosulfonic acid, magic acid, hydrochloric acid, hydrobromic acid, and hydroiodic acid. It may be understood that by subjecting the silicon oxide (SiOx) to the surface modification treatment with the acid solution to realize oxidation and etching treatment of the surface of the silicon oxide (SiOx), weak defects can be formed on the surface of the silicon oxide (SiOx), reaction sites in a prelithiation process are increased, a prelithiation reaction is promoted to be more uniform, more lithium silicate growth sites are obtained, and convenience is provided for even distribution of the lithium silicate in particles. At a fixed prelithiation amount, adjustment of the crystal phase type and content of the lithium silicate is facilitated. In addition, by subjecting the silicon oxide after the surface modification to the prelithiation treatment, catalytic growth of silicon grains from the lithium silicate can be greatly reduced.

In some embodiments, a concentration of the acid solution is equal to or less than 2 mol/L. The concentration of the acid solution may be specifically 0.1 mol/L, 0.5 mol/L, 1 mol/L, 1.5 mol/L, 1.6 mol/L, 1.7 mol/L, 1.8 mol/L, 1.9 mol/L, and 2 mol/L, etc., and certainly may also be other values in the above range, which is not limited herein.

In some embodiments, a temperature of the first surface modification treatment is 30°C-100°C, may be specifically 30°C, 40°C, 50°C, 60°C, 70°C, 80°C, 90°C, and 100°C, etc., and certainly may also be other values in the above range, which is not limited herein.

In some embodiments, a time of the first surface modification treatment is 2 h-8 h, may be specifically 2 h, 3 h, 4 h, 5 h, 6 h, 7 h, and 8 h, etc., and certainly may also be other values in the above range, which is not limited herein.

In some embodiments, the preparation method further includes subjecting the silicon oxide (SiOx) after the first surface modification treatment to solid-liquid separation, washing, and drying treatment.

In some embodiments, the preparation method further includes subjecting the silicon oxide (SiOx) after the first surface modification treatment to solid-liquid separation, washing, and drying treatment, and a temperature of the drying is 50°C-180°C. Specifically, the temperature of the drying may be 50°C, 60°C, 70°C, 80°C, 90°C, 100°C, 110°C, 120°C, 130°C, 140°C, 150°C, 160°C, 170°C, and 180°C, and certainly may also be other values in the above range, which is not limited herein.

In step S200, a mixture containing the silicon oxide (SiOx) after the first surface modification treatment and a reducing lithium-containing compound is subjected to prelithiation treatment at 300°C-800°C and coating treatment to obtain a precursor, wherein the x is greater than 0 and less than 2.

In the above solution, the temperature of the prelithiation treatment may be specifically 300°C, 350°C, 400°C, 450°C, 500°C, 550°C, 600°C, 650°C, 700°C, 710°C, and 800°C, etc., and certainly may also be other values in the above range, which is not limited herein. It may be understood that when the temperature of the prelithiation treatment is too low, the reducing lithium-containing compound cannot completely react with the silicon oxide, and the remaining silicon oxide will lead to a high oxygen content in the anode material, which is not conducive to improving the initial efficiency of the anode material. When the temperature of the prelithiation treatment is too high, the reducing lithium-containing compound reacts violently with the silicon oxide, and the lithium silicate is generated at a high speed and a large amount. On the one hand, the growth of silicon grains in the material is catalyzed, such that the cycle performance of the anode material is deteriorated. On the other hand, as the lithium silicate is generated at a high speed and a large amount, the stability of a negative electrode paste is reduced, and thus the negative electrode paste cannot be stably stored. By controlling the temperature of the prelithiation treatment in the range, convenience is provided for promoting a reaction between a lithium source and the silicon oxide, balancing the crystal phase type and content of the lithium silicate, and obtaining silicon grains in an appropriate size, so as to further improve the storage stability of a paste of the material.

In some embodiments, the silicon oxide is silicon monoxide. It may be understood that when silicon monoxide is used as the silicon oxide, the problem of unstable processing performance after the silicon monoxide is doped with lithium to improve the initial efficiency can be effectively solved.

In some embodiments, the reducing lithium-containing compound includes at least one of lithium hydride, lithium alkylide, metallic lithium, lithium aluminum hydride, lithium amide, lithium borohydride, and a lithium-silicon alloy. It may be understood that when the reducing lithium-containing compound is selected as a lithium source for the prelithiation treatment, since the surface of the silicon oxide after the first surface modification has evenly distributed growth sites, by subjecting the mixture containing the silicon oxide after the first surface modification treatment and the reducing lithium-containing compound to the prelithiation treatment, the utilization rate of lithium and the distribution uniformity of a prelithiation product on the surface of the silicon oxide can be improved; increase of the utilization rate of lithium is conducive to reducing the cost and improving the prelithiation effect (initial efficiency); and the prelithiation product is evenly distributed in the anode material, which is conducive to buffering the volume change of a battery prepared from the anode material in a charge and discharge process and improving the cycle performance.

In some embodiments, a mass ratio of the silicon oxide after the first surface modification treatment to the reducing lithium-containing compound is 1:(0.03-0.2), may be specifically 1:0.03, 1:0.05, 1:0.08, 1:0.1, 1:0.15, and 1:0.2, etc., and certainly may also be other values in the above range, which is not limited herein.

In some embodiments, the prelithiation treatment is performed in a protective atmosphere. It may be understood that by performing the prelithiation treatment in the protective atmosphere, the risk of introducing oxygen can be reduced, improvement of the initial efficiency of the prelithiation material is ensured, and meanwhile, convenience is also provided for regulating and controlling the composition of the lithium silicate and further improving the storage stability of a paste.

In some embodiments, the protective atmosphere includes at least one of nitrogen, helium, neon, argon, krypton, and xenon.

In some embodiments, a time of the prelithiation treatment is 3 h-9 h, may be specifically 3 h, 4 h, 5 h, 6 h, 7 h, 8 h, and 9 h, etc., and certainly may also be other values in the above range, which is not limited herein. It may be understood that by controlling the time of the prelithiation treatment in the above range, full calcination can be realized, such that the Li₂SiO₃ can be fully converted into the Li₂Si₂O₅.

In some embodiments, the lithium silicate includes at least one of Li₂SiO₃, Li₂Si₂O₅, and Li₄SiO₄.

In some embodiments, before subjecting the mixture containing the silicon oxide after the first surface modification treatment and the reducing lithium-containing compound to the prelithiation treatment at 300-800°C, the method further includes subjecting the mixture containing the silicon oxide after the first surface modification treatment and the reducing lithium-containing compound to mixing treatment.

In some embodiments, a temperature of the mixing treatment is 60°C-320°C, may be specifically 60°C, 70°C, 80°C, 90°C, 100°C, 150°C, 200°C, 250°C, 300°C, 310°C, and 320°C, etc., and certainly may also be other values in the above range, which is not limited herein.

In some embodiments, a time of the mixing treatment is 0.5 h-10 h, may be specifically 0.5 h, 1 h, 2 h, 3 h, 4 h, 5 h, 6 h, 7 h, 8 h, 9 h, and 10 h, etc., and certainly may also be other values in the above range, which is not limited herein.

In some embodiments, a device required for the mixing treatment includes at least one of a device having a dispersion function or a device having a shearing force effect. It may be understood that by subjecting the mixture containing the silicon oxide after the first surface modification treatment and the reducing lithium-containing compound to the mixing treatment before using a device having a high-speed dispersion function or having a shearing force effect for the prelithiation, the early reaction intensity of the prelithiation can be effectively alleviated, and convenience is provided for regulating and controlling components of the lithium silicate to meet requirements of the present application, so as to improve the storage stability of a paste and the bonding ability of the active substance in an electrode plate.

In some embodiments, before subjecting the mixture containing the silicon oxide after the first surface modification treatment and the reducing lithium-containing compound to the prelithiation treatment, the method further includes subjecting the silicon oxide after the first surface modification treatment to coating treatment.

It may be understood that the coating treatment may be performed before subjecting the mixture containing the silicon oxide after the first surface modification treatment and the reducing lithium-containing compound to the prelithiation treatment, or may be performed after subjecting the mixture containing the silicon oxide after the first surface modification treatment and the reducing lithium-containing compound to the prelithiation treatment, which is not limited herein.

It should be noted that when the coating treatment is performed before subjecting the mixture containing the silicon oxide after the first surface modification treatment and the reducing lithium-containing compound to the prelithiation treatment, the coating treatment needs to be performed before subjecting the mixture containing the silicon oxide after the first surface modification treatment and the reducing lithium-containing compound to the mixing treatment.

In some embodiments, the coating treatment includes carbon coating treatment, and a process of the carbon coating treatment includes at least one of a liquid-phase coating method, a gas-phase coating method, and a solid-phase coating method.

In some embodiments, the coating treatment includes carbon coating treatment, and a coating material of the carbon coating treatment includes at least one of amorphous carbon, graphene, graphite, carbon nanotubes, and carbon fibers. Preferably, the coating material of the carbon coating is amorphous carbon. It may be understood that the amorphous carbon is produced by high temperature pyrolysis and has a certain degree of graphitization. The amorphous carbon is used to coat the surface of the silicon oxide. On the one hand, the conductivity of the anode material can be improved. On the other hand, the amorphous carbon produced by high temperature pyrolysis has a relatively developed pore structure, which can restrain the volume expansion of the anode material after being coated on the surface of the silicon oxide, thereby being conducive to improving the cycle performance of the anode material.

In step S300, the precursor is subjected to second surface modification treatment to obtain an anode material, wherein the anode material includes a silicon-based active substance and a coating layer located on at least a partial surface of the silicon-based active substance, and the silicon-based active substance includes silicon and a lithium silicate.

In some embodiments, the second surface modification treatment includes at least one of purification treatment, coating treatment, heat treatment, oxidation treatment, and etching treatment.

In some embodiments, the coating treatment may be specifically secondary carbon coating treatment, polymer coating treatment, or inorganic coating treatment, etc., which is not limited herein.

In specific embodiments, the heat treatment is combined with other manners. For example, the heat treatment may be combined with the polymer coating treatment and the etching treatment, which is not limited herein.

In some embodiments, a temperature of the second surface modification treatment is 50°C-900°C, may be specifically 50°C, 100°C, 200°C, 300°C, 400°C, 500°C, 600°C, 700°C, 800°C, and 900°C, etc., and certainly may also be other values in the above range, which is not limited herein.

In some embodiments, a time of the second surface modification treatment is 0.5 h-10 h, may be specifically 0.5 h, 1 h, 2 h, 3 h, 4 h, 5 h, 6 h, 7 h, 8 h, 9 h, and 10 h, etc., and certainly may also be other values in the above range, which is not limited herein.

In some embodiments, the second surface modification treatment includes placing the precursor in an aluminum hydroxide solution for purification treatment. It may be understood that because coatings on an aluminum foil and a diaphragm in a cell system have a same source, the constituted cell system can have higher compatibility by placing the precursor in the aluminum hydroxide solution for the purification treatment.

In the above preparation method, when the surface modification treatment is too excessive, too many prelithiation reaction sites on the surface of the silicon oxide react violently with the lithium source on the surface layer of the anode material to generate more Li₂SiO₃ or even Li₄SiO₄, such that the content of Li₂Si₂O₅ is particularly low. When the surface modification treatment is too weak, the prelithiation reaction sites on the surface of the silicon oxide are insufficient, the content of the generated lithium silicate is small, and the prelithiation effect cannot be achieved. In addition, the reaction temperature and the reaction time in a prelithiation process also affect the product composition of the anode material after the prelithiation. When the reaction temperature is too high and the reaction time is too long, the content of Li₂SiO₃ is high. When the reaction temperature is too low and the reaction time is too short, the content of Li₂Si₂O₅ is high. In summary, it is necessary to control the appropriate active sites and the appropriate temperature and time, and the anode material that meets requirements can be prepared by combing the three.

In a fourth aspect, the present application provides a lithium-ion battery. The lithium-ion battery includes the anode material as described in the first aspect or an anode material prepared by the preparation method as described in the second aspect.

The description above shows only preferred embodiments of the present application and is not intended to limit the present application. Any modifications, equivalent substitutions, improvements and the like made within the spirit and principles of the present application shall be included in the scope of protection of the present application.

### Example

### Example 1

(1) Silicon monoxide (SiO) was placed in a mixed acid solution of nitric acid and hydrochloric acid with a concentration of 1 mol/L, stirred and dispersed at 50°C for 4 h, subjected to suction filtration, and washed with pure water, and a resulting product was dried at 80°C to obtain silicon monoxide (SiO) after surface modification treatment.
(2) A mixture containing 1,000 g of the silicon monoxide (SiO) after surface modification treatment and 200 g of lithium hydride was placed in a high-speed dispersing machine, introduced with argon, heated to 80°C, dispersed at 2,000 r/min for 1 h for mixing treatment, cooled to room temperature, and then put into a crucible. The crucible was placed in a box-type furnace for prelithiation treatment at 500°C for 4 h, and then cooled to 25°C to obtain a silicon-based active substance. Then, a surface of the silicon-based active substance was coated with 2 wt% of amorphous carbon by a liquid-phase coating method to obtain a precursor.
(3) The precursor was placed in Al(OH)₃ for purification treatment at 40°C for 2 h, subjected to suction filtration, and washed to remove a residual alkaline solution on a surface of the precursor. Then, the surface of the precursor was coated with 2 wt% of amorphous carbon by a liquid-phase coating method to obtain an anode material.

The anode material prepared in the present example includes a silicon-based active substance and a carbon material located on at least a partial surface of the silicon-based active substance, the silicon-based active substance includes silicon and a lithium silicate, and the silicon includes nano-silicon grains. The anode material was determined by an XRD ray diffraction method, and according to an X-ray diffraction spectrum of the anode material, a relationship between A, B, and C in the anode material was calculated and obtained, meeting: (A+B)/C=4.6, (A+C)/B=2.1, and (B+C)/A=12.3. Fig. 2 shows a relationship between the powder density and powder conductivity of the anode material prepared in the present example. As can be seen from Fig. 2, a relationship between ρ1, p2, σ1, and σ2 meets: (σ2-σ1)/(ρ2-ρ1)=0.32. A relationship between shearing forces in a rheological curve meets 2τ1>(τ2-τ0).

The anode material prepared in the present example can be stably stored for more than 72 h after being prepared into a negative electrode paste.

### Example 2

An anode material was prepared by a substantially same method as Example 1, and differences are as follows.

(2) 1,000 g of silicon monoxide (SiO) after surface modification treatment was coated with 2 wt% of amorphous carbon by a liquid-phase coating method, and then 200 g of lithium hydride was weighed, placed in a high-speed dispersing machine, introduced with argon, heated to 80°C, dispersed at 2,000 r/min for 1 h for mixing treatment, cooled to room temperature, and then put into a crucible. The crucible was placed in a box-type furnace for prelithiation treatment at 500°C for 4 h, and then cooled to 25°C to obtain a precursor.

Other operations were the same as those in Example 1.

The anode material prepared in the present example includes a silicon-based active substance and a carbon material located on at least a partial surface of the silicon-based active substance, the silicon-based active substance includes silicon and a lithium silicate, and the silicon includes nano-silicon grains. The anode material was determined by an XRD ray diffraction method, and according to an X-ray diffraction spectrum of the anode material, a relationship between A, B, and C in the anode material was calculated and obtained, meeting: (A+B)/C=5.1, (A+C)/B=2.0, and (B+C)/A=10.3. A relationship between ρ1, ρ2, *σ*1, and *σ*2 meets: (σ2-σ1)/(ρ2-ρ1)=0.33. A relationship between shearing forces in a rheological curve meets 2τ1>(τ2-τ0).

The anode material prepared in the present example can be stably stored for more than 72 h after being prepared into a negative electrode paste.

### Example 3

An anode material was prepared by a substantially same method as Example 1, and differences are as follows.

(2) A mixture containing 1,000 g of silicon monoxide (SiO) after surface modification treatment and 150 g of metallic lithium was placed in a high-speed dispersing machine, introduced with argon, heated to 80°C, dispersed at 2,000 r/min for 1 h for mixing treatment, cooled to room temperature, and then put into a crucible. The crucible was placed in a box-type furnace for prelithiation treatment at 500°C for 4 h, and then cooled to 25°C to obtain a silicon-based active substance. Then, a surface of the silicon-based active substance was coated with 2 wt% of amorphous carbon by a liquid-phase coating method to obtain a precursor.

Other operations were the same as those in Example 1.

The anode material prepared in the present example includes a silicon-based active substance and a carbon material located on at least a partial surface of the silicon-based active substance, the silicon-based active substance includes silicon and a lithium silicate, and the silicon includes nano-silicon grains. The anode material was determined by an XRD ray diffraction method, and according to an X-ray diffraction spectrum of the anode material, a relationship between A, B, and C in the anode material was calculated and obtained, meeting: (A+B)/C=4.1, (A+C)/B=2.2, and (B+C)/A=8.8. A relationship between ρ1, ρ2, *σ*1, and *σ*2 meets: (σ2-σ1)/(ρ2-ρ1)=0.46. A relationship between shearing forces in a rheological curve meets 2τ1>(τ2-τ0).

The anode material prepared in the present example can be stably stored for more than 72 h after being prepared into a negative electrode paste.

### Example 4

(1) A silicon oxide (SiO_{1.5}) was placed in a mixed acid solution of nitric acid and hydrochloric acid with a concentration of 1 mol/L, stirred and dispersed at 50°C for 4 h, subjected to suction filtration, and washed with pure water, and a resulting product was dried at 80°C to obtain a silicon oxide (SiO_{1.5}) after surface modification treatment.
(2) A mixture containing 1,000 g of the silicon oxide (SiO_{1.5}) after surface modification treatment and 100 g of lithium alkylide was placed in a high-speed dispersing machine, introduced with argon, heated to 80°C, dispersed at 2,000 r/min for 1 h for mixing treatment, cooled to room temperature, and then put into a crucible. The crucible was placed in a box-type furnace for prelithiation treatment at 500°C for 4 h, and then cooled to 25°C to obtain a silicon-based active substance. Then, a surface of the silicon-based active substance was coated with 2 wt% of amorphous carbon by a liquid-phase coating method to obtain a precursor.
(3) The precursor was placed in Al(OH)₃ for purification treatment at 40°C for 2 h, subjected to suction filtration, and washed to remove a residual alkaline solution on a surface of the precursor. Then, the surface of the precursor was coated with 2 wt% of amorphous carbon by a liquid-phase coating method to obtain an anode material.

The anode material prepared in the present example includes a silicon-based active substance and a carbon material located on at least a partial surface of the silicon-based active substance, the silicon-based active substance includes silicon and a lithium silicate, and the silicon includes nano-silicon grains. The anode material was determined by an XRD ray diffraction method, and according to an X-ray diffraction spectrum of the anode material, a relationship between A, B, and C in the anode material was calculated and obtained, meeting: (A+B)/C=2.5, (A+C)/B=1.8, and (B+C)/A=1.2. A relationship between ρ1, ρ2, σ1, and σ2 meets: (σ2-σ1)/(ρ2-ρ1)=0.52. A relationship between shearing forces in a rheological curve meets 2τ1>(τ2-τ0).

The anode material prepared in the present example can be stably stored for more than 72 h after being prepared into a negative electrode paste.

### Example 5

An anode material was prepared by a substantially same method as Example 1, and differences are as follows.
(1) Silicon monoxide (SiO) was placed in a mixed acid solution of nitric acid and hydrochloric acid with a concentration of 2 mol/L, stirred and dispersed at 50°C for 4 h, subjected to suction filtration, and washed with pure water, and a resulting product was dried at 80°C to obtain silicon monoxide (SiO) after surface modification treatment.

Other operations were the same as those in Example 1.

The anode material prepared in the present example includes a silicon-based active substance and a carbon material located on at least a partial surface of the silicon-based active substance, the silicon-based active substance includes silicon and a lithium silicate, and the silicon includes nano-silicon grains. The anode material was determined by an XRD ray diffraction method, and according to an X-ray diffraction spectrum of the anode material, a relationship between A, B, and C in the anode material was calculated and obtained, meeting: (A+B)/C=2.8, (A+C)/B=1.5, and (B+C)/A=1.9. A relationship between ρ1, ρ2, σ1, and σ2 meets: (σ2-σ1)/(ρ2-ρ1)=0.61. A relationship between shearing forces in a rheological curve meets 2τ1>(τ2-τ0).

The anode material prepared in the present example can be stably stored for more than 72 h after being prepared into a negative electrode paste.

### Example 6

An anode material was prepared by a substantially same method as Example 1, and differences are as follows.

(2) A mixture containing 1,000 g of silicon monoxide (SiO) after surface modification treatment and 200 g of lithium hydride was placed in a high-speed dispersing machine, introduced with argon, heated to 80°C, dispersed at 2,000 r/min for 1 h for mixing treatment, cooled to room temperature, and then put into a crucible. The crucible was placed in a box-type furnace for prelithiation treatment at 300°C for 5 h, and then cooled to 25°C to obtain a silicon-based active substance. Then, a surface of the silicon-based active substance was coated with 2 wt% of amorphous carbon by a liquid-phase coating method to obtain a precursor. Other operations were the same as those in Example 1.

The anode material prepared in the present example includes a silicon-based active substance and a carbon material located on at least a partial surface of the silicon-based active substance, the silicon-based active substance includes silicon and a lithium silicate, and the silicon includes nano-silicon grains. The anode material was determined by an XRD ray diffraction method, and according to an X-ray diffraction spectrum of the anode material, a relationship between A, B, and C in the anode material was calculated and obtained, meeting: (A+B)/C=10, (A+C)/B=1.0, and (B+C)/A=30. A relationship between ρ1, ρ2, *σ*1, and *σ*2 meets: (σ2-σ1)/(ρ2-ρ1)=0.46. A relationship between shearing forces in a rheological curve meets 2τ1>(τ2-τ0).

The anode material prepared in the present example can be stably stored for more than 72 h after being prepared into a negative electrode paste.

### Example 7

An anode material was prepared by a substantially same method as Example 1, and differences are as follows.

(2) A mixture containing 1,000 g of silicon monoxide (SiO) after surface modification treatment and 200 g of lithium hydride was placed in a high-speed dispersing machine, introduced with argon, heated to 80°C, dispersed at 2,000 r/min for 1 h for mixing treatment, cooled to room temperature, and then put into a crucible. The crucible was placed in a box-type furnace for prelithiation treatment at 800°C for 4 h, and then cooled to 25°C to obtain a silicon-based active substance. Then, a surface of the silicon-based active substance was coated with 2 wt% of amorphous carbon by a liquid-phase coating method to obtain a precursor.

Other operations were the same as those in Example 1.

The anode material prepared in the present example includes a silicon-based active substance and a carbon material located on at least a partial surface of the silicon-based active substance, the silicon-based active substance includes silicon and a lithium silicate, and the silicon includes nano-silicon grains. The anode material was determined by an XRD ray diffraction method, and according to an X-ray diffraction spectrum of the anode material, a relationship between A, B, and C in the anode material was calculated and obtained, meeting: (A+B)/C=1.3, (A+C)/B=5, and (B+C)/A=29.3. A relationship between ρ1, ρ2, σ1, and σ2 meets: (σ2-σ1)/(ρ2-ρ1)=0.5. A relationship between shearing forces in a rheological curve meets 2τ1>(τ2-τ0).

The anode material prepared in the present example can be stably stored for more than 72 h after being prepared into a negative electrode paste.

### Comparative Example 1

Differences from Example 1 are as follows.

In the present example, in addition to that a crucible was placed in a box-type furnace for prelithiation treatment at 200°C for 5 h in step (2), other operation conditions and raw materials were the same as those in Example 1.

An anode material prepared in the present comparative example includes a silicon-based active substance and a carbon material located on at least a partial surface of the silicon-based active substance, and the silicon-based active substance includes silicon and a lithium silicate. The anode material was determined by an XRD ray diffraction method, and according to an X-ray diffraction spectrum of the anode material, a relationship between A, B, and C in the anode material was calculated and obtained, meeting: (A+B)/C=8, (A+C)/B=13, and (B+C)/A=40. A relationship between ρ1, ρ2, σ1, and σ2 meets: (σ2-σ1)/(ρ2-ρ1)=0.9. A relationship between shearing forces in a rheological curve meets 2τ1>(τ2-τ0).

The anode material prepared in the present comparative example cannot be stably stored after being prepared into a negative electrode paste.

### Comparative Example 2

Differences from Example 1 are as follows.

In the present example, in addition to that a crucible was placed in a box-type furnace for prelithiation treatment at 900°C for 2 h in step (2), other operation conditions and raw materials were the same as those in Example 1.

An anode material prepared in the present comparative example includes a silicon-based active substance and a carbon material located on at least a partial surface of the silicon-based active substance, and the silicon-based active substance includes silicon and a lithium silicate. The anode material was determined by an XRD ray diffraction method, and according to an X-ray diffraction spectrum of the anode material, a relationship between A, B, and C in the anode material was calculated and obtained, meeting: (A+B)/C=1.8, (A+C)/B=18, and (B+C)/A=30. A relationship between ρ1, ρ2, σ1, and σ2 meets: (σ2-σ1)/(ρ2-ρ1)=0.96. A relationship between shearing forces in a rheological curve meets 2τ1<(τ2-τ0).

The anode material prepared in the present comparative example cannot be stably stored after being prepared into a negative electrode paste.

### Comparative Example 3

Differences from Example 1 are as follows.

In the present comparative example, processes of step (1) in Example 1 were not performed, and other operation conditions and raw materials were the same as those in Example 1.

An anode material prepared in the present comparative example includes a silicon-based active substance and a carbon material located on at least a partial surface of the silicon-based active substance, and the silicon-based active substance includes silicon and a lithium silicate. The anode material was determined by an XRD ray diffraction method, and according to an X-ray diffraction spectrum of the anode material, a relationship between A, B, and C in the anode material was calculated and obtained, meeting: (A+B)/C=2.1, (A+C)/B=6.2, and (B+C)/A=6.9. A relationship between ρ1, ρ2, σ1, and σ2 meets: (σ2-σ1)/(ρ2-ρ1)=0.72. A relationship between shearing forces in a rheological curve meets 2τ1<(τ2-τ0).

The anode material prepared in the present comparative example cannot be stably stored after being prepared into a negative electrode paste.

### Comparative Example 4

Differences from Example 1 are as follows.

In the present comparative example, processes of step (3) in Example 1 were not performed, and other operation conditions and raw materials were the same as those in Example 1.

An anode material prepared in the present comparative example includes a silicon-based active substance and a carbon material located on at least a partial surface of the silicon-based active substance, and the silicon-based active substance includes silicon and a lithium silicate. The anode material was determined by an XRD ray diffraction method, and according to an X-ray diffraction spectrum of the anode material, a relationship between A, B, and C in the anode material was calculated and obtained, meeting: (A+B)/C=1.8, (A+C)/B=7.0, and (B+C)/A=19. A relationship between ρ1, ρ2, σ1, and σ2 meets: (σ2-σ1)/(ρ2-ρ1)=0.96. A relationship between shearing forces in a rheological curve meets 2τ1<(τ2-τ0).

The anode material prepared in the present comparative example cannot be stably stored after being prepared into a negative electrode paste.

### Test methods:

### (1) XRD test method for an anode material:

An XRD spectrum of the material was tested by a Bruker AXS D8-Focus device of Germany. Test parameters of the device are as follows: a CuKα ray was used, a divergence slit was 1.0°, an anti-scattering slit was 2.0°, a receiving slit was 9.6°, a voltage range was 40 KV, a current was 40 mA, a scanning range was 10-90°, a scan step was 0.01313, a scanning mode was a continuous mode, a scanning time for each step was 10.2 s, and a calculation wavelength was 1.5406 Å. The value of A/B/C and the average particle size of silicon grains were calculated.

### (2) Test method for the powder conductivity and powder density of an anode material:

A test device was purchased from Mitsubishi Chemical of Japan. Test parameters are as follows: the order of magnitude of initial resistance was selected as -3, a voltage limit was selected as 10 V, and the sample quality was ensured that a thickness of a sample at a pressure of 20 KN was 3-5 mm. By setting the pressure at 4, 8, 12, 16, or 20 KN, respectively, an electrode radius at 0.7 mm, and a sample radius at 10 mm, the corresponding powder density and the powder conductivity were measured at different pressures.

### (3) Test method for a rheological curve of a negative electrode paste:

An active material, carboxymethyl cellulose, conductive carbon black, and styrene butadiene rubber were mixed at a mass ratio of 95.3:1.3:1.5:1.9 to form a negative electrode paste with a solid content of 50%, wherein the active material included an anode material and graphite at a mass ratio of 9:1. A rheological property of the negative electrode paste was tested by using an HAAKE rotational rheometer of German to obtain a rheological curve of the negative electrode paste.

### (4) Test of cycle performance after power deduction for 50 cycles:

A device and a method used in accordance with the operation instruction BTRTC/ZY/01-020 "Operation Instruction for Button Battery Method" of BTR company: PAA was selected as a binder to prepare a glue solution with a solid content of 5%; then, a negative active material and a conductive agent were added at a mass ratio of the negative active material, the conductive agent (SP) and the binder (PAA) being 75:15:10, and evenly dispersed by a high-speed dispersing machine to form a negative electrode paste; and the paste was evenly coated on an upper surface of a copper foil with a thickness of 10 um, and then dried, rolled, punched, and dried again to prepare an anode. A lithium plate was selected as a cathode, and a button battery was assembled in the order of a shell, a gasket, a nickel plate, a lithium plate, a diaphragm, an anode, and a shell. A metallic lithium plate was selected as a counter electrode, the diaphragm was a PP-PE-PP composite membrane with a diameter of 19.2 mm, an electrolyte included components of EC, EMC and DMC at a ratio of 1:1:1, and a concentration of a lithium salt (LiPF₆) was 1.05 mol/L. A button battery charging and discharging device was used for discharging to 0.01 V at 0.1 C, discharging to 0.01 V at a gradient decrease of 0.01 C, discharging to 0.005 V at 0.01 C, and charging to 1.5 V at 0.1 C in a 1st cycle; discharging to 0.01 V at 0.2 C, discharging to 0.01 V at a gradient decrease of 0.02 C, discharging to 0.005 V at 0.02 C, and charging to 1.5 V at 0.2 C in a 2nd cycle; discharging to 0.01 V at 0.5 C, discharging to 0.01 V at a gradient decrease of 0.05 C, discharging to 0.005 V at 0.05 C, and charging to 1.5 V at 0.5 C in a 3rd cycle; discharging to 0.01 V at 1 C, discharging to 0.01 V at a gradient decrease of 0.1 C, discharging to 0.005 V at 0.1 C, and charging to 1.5 V at 1 C in a 4th cycle to a 50th cycle; and discharging to 0.01 V at 0.1 C, discharging to 0.01 V at a gradient decrease of 0.01 C, and discharging to 0.005 V at 0.01 C in a 51st cycle.

### (5) Method for assessing the storage stability of a negative electrode paste:

An active material, carboxymethyl cellulose, conductive carbon black, and styrene butadiene rubber were mixed at a mass ratio of 95.3:1.3:1.5:1.9 to form a negative electrode paste with a solid content of 50%, wherein the active material included an anode material and graphite at a mass ratio of 9:1. Then, the negative electrode paste was subjected standing at 25°C, and changes in the viscosity, fluidity, solid content, fineness, coating conditions and the like of the paste in a standing process were observed. Increase or decrease of the viscosity means that the paste may have the phenomenon of accumulation or dispersion of particles, which is not conducive to the stability of the paste. Obvious phenomena of stratification and fluid thickening show that the paste has reduced dispersion, poor fluidity, and decreased stability. When the solid content is significantly changed, the paste has the phenomenon of accumulation or precipitation of particles, which affects the stability. When large particles are aggregated or the fineness of particles is obviously changed, the stability of the paste is reduced. The paste is coated on a substrate, and the uniformity and adhesion of a coating membrane are observed. When the coating membrane has the situations of unevenness, falling or cracking, it is indicated that the paste has poor stability.

### (6) Test method for the specific capacity:

A button battery charging and discharging device was used for charging to 10 mV at a constant current of 0.1 C, charging to 5 mV at a constant current of 0.02 C, and discharging to 1.5 V at a constant current of 0.1 C.

The above test results are shown in Table 1 for detail.

**Table 1 Test results of examples and comparative examples**

| | Specific capacity mAh/g | Initial efficiency % | Cycle retention rate % | Paste storage time h |
|---|---|---|---|---|
| Example 1 | 1501 | 91.0 | 90.2 | 74 |
| Example 2 | 1483 | 91.5 | 92.2 | 80 |
| Example 3 | 1532 | 91.0 | 91.8 | 79 |
| Example 4 | 1510 | 90.2 | 90.2 | 76 |
| Example 5 | 1491 | 90.0 | 89.8 | 73 |
| Example 6 | 1488 | 90.1 | 92.5 | 76 |
| Example 7 | 1499 | 90.2 | 91.7 | 75 |
| Comparative Example 1 | 1570 | 82.1 | 85.4 | 5 |
| Comparative Example 2 | 1350 | 92.0 | 80.8 | 2 |
| Comparative Example 3 | 1405 | 87.6 | 88.9 | 9 |
| Comparative Example 4 | 1528 | 91.8 | 82.0 | 3 |

As can be seen through combination of the above examples and comparative examples, by controlling a balance relationship between three components, including Li₂SiO₃, Li₂Si₂O₅, and silicon in the anode materials in Examples 1-7, the lithiation uniformity of the anode materials can be improved, the processing performance of the anode materials is improved, and correspondingly the storage stability of the negative electrode pastes prepared from the anode materials is improved. Meanwhile, by controlling the balance relationship between the three components, including the Li₂SiO₃, the Li₂Si₂O₅, and the silicon in the anode materials, the content of Li₂Si₂O₅ in the anode materials can be increased, a destruction effect of a lithium silicate on a binder is reduced, the stability of an electrode plate is improved, the cycle performance of the anode materials is improved, and the cycle life is prolonged.

Compared with Example 1, the prelithiation treatment is performed at a too low temperature for the anode material in Comparative Example 1, a lithium source cannot fully react with silicon monoxide in a prelithiation process, and the prepared anode material has a high oxygen content, such that the initial efficiency of the anode material is low.

Compared with Example 1, the prelithiation treatment is performed at a too high temperature for the anode material in Comparative Example 2, a lithium source reacts violently with silicon monoxide in a prelithiation process, and lithium silicate is generated at a high speed and a large amount. On the one hand, the growth of silicon grains in the anode material is catalyzed, leading to deterioration of the cycle performance of the material. On the other hand, the storage stability of the negative electrode paste prepared from the anode material is reduced, such that the paste cannot be stably stored for a long time.

Compared with Example 1, the surface modification of silicon monoxide is not performed for the anode material in Comparative Example 3, reaction sites in a prelithiation process are decreased, a prelithiation reaction is not uniform, growth sites of a lithium silicate are decreased, the lithium silicate is unevenly distributed in particles of the anode material, and inconvenience is provided for adjusting the crystal phase type and content of the lithium silicate, such that a relative relationship between three components, including Li₂SiO₃, Li₂Si₂O₅, and silicon in the anode material is unbalanced, the storage performance of the negative electrode paste prepared from the anode material is reduced, the negative electrode paste cannot be stably stored for a long time, the paste is prone to settling, stratification, and gas production in a storage process, and an active substance is unevenly distributed in a coated electrode plate. Moreover, the lithium silicate in the anode material has a great destruction effect on a binder, which reduces the structural stability of an electrode plate and leads to decrease of the cycle performance of the anode material.

Compared with Example 1, the second surface treatment of the precursor is not performed for the anode material in Comparative Example 4. On the one hand, the anode material has poor interface stability, the performance stability of an SEI membrane formed is decreased, and the risk of erosion of the anode material in an electrolyte is increased. On the other hand, the bonding strength of a binder to the anode material is reduced, and the peeling strength of an electrode plate is reduced, such that the electrode plate is easy to rebound, the stability of a conductive network of the electrode plate is reduced, and the cycle performance of the anode material is reduced.

## Claims

1. An anode material, wherein the anode material comprises a silicon-based active substance and a coating layer located on at least a partial surface of the silicon-based active substance, and the silicon-based active substance comprises silicon and a lithium silicate;
as determined by an XRD ray diffraction method, in an X-ray diffraction spectrum of the anode material, a peak intensity of a strongest diffraction peak of the anode material in a 2θ range of 18° to 20° is A1, a peak intensity of a strongest diffraction peak in a 2θ range of 26° to 27.9° is A2, a peak intensity of a strongest diffraction peak in a 2θ range of 32° to 34° is A3, and A1+A2+A3 is equal to A;
a peak intensity of a strongest diffraction peak of the anode material in a 2θ range of 16° to 17° is B1, a peak intensity of a strongest diffraction peak in a 2θ range of 22° to 25.9° is B2, a peak intensity of a strongest diffraction peak in a 2θ range of 36° to 38° is B3, and B1+B2+B3 is equal to B;
a peak intensity of a strongest diffraction peak of the anode material in a 2θ range of 28° to 30° is C1, a peak intensity of a strongest diffraction peak in a 2θ range of 46° to 48° is C2, a peak intensity of a strongest diffraction peak in a 2θ range of 56° to 58° is C3, and C1+C2+C3 is equal to C;
and a relationship between the A, the B, and the C simultaneously meets: 0<(A+B)/C≤10 and 0<(A+C)/B≤5.

2. The anode material according to claim 1, wherein the anode material is tested by using a powder resistivity tester, the anode material is tested to have a powder conductivity of σ1 at a powder density of ρ1, the anode material is tested to have a powder conductivity of σ2 at a powder density of ρ2, and a following relationship is met: (σ2-σ1)/(ρ2-ρ1)≤0.8.

3. The anode material according to claim 1, wherein the relationship between the A, the B, and the C further meets: 1≤(B+C)/A≤30.

4. The anode material according to claim 1, wherein the silicon-based active substance further comprises a silicon-oxygen complex.

5. The anode material according to claim 1, wherein a molar ratio of oxygen atoms to silicon atoms in the anode material is 0.5-2.

6. The anode material according to claim 1, wherein the silicon in the anode material comprises nano-silicon grains, and an average particle size of the nano-silicon grains is 0 nm-20 nm excluding 0 nm.

7. The anode material according to claim 1, wherein the lithium silicate comprises at least one of Li₂SiO₃, Li₂Si₂O₅, and Li₄SiO₄.

8. The anode material according to claim 1, wherein the coating layer comprises a carbon material, and a mass content of the carbon material in the anode material is equal to or less than 10%.

9. The anode material according to claim 1, wherein a mass content of the silicon in the anode material is 20%-70%.

10. The anode material according to claim 1, wherein a mass content of the lithium silicate in the anode material is 30%-75%.

11. The anode material according to claim 1, wherein in that a specific surface area of the anode material is equal to or less than 10 m²/g.

12. The anode material according to claim 1, wherein a pH value of the anode material is 7.2-11.0.

13. The anode material according to any one of claims 1-12, wherein an active material, carboxymethyl cellulose, conductive carbon black, and styrene butadiene rubber are mixed at a mass ratio of 95.3:1.3:1.5:1.9 to form a negative electrode paste with a solid content of 50%, wherein the active material comprises the anode material and graphite at a mass ratio of 9:1; a rheological property of the negative electrode paste is tested by using an HAAKE rotational rheometer of German to obtain a rheological curve of the negative electrode paste; and in the rheological curve, when shearing rates are 0 S⁻¹, 150 S⁻¹, and 300 S⁻¹, corresponding shearing stresses in the rheological curve are τ0, τ1, and τ2, and a relationship between the shearing stresses meets: 2τ1>(τ2-τ0).

14. A negative electrode paste, wherein the negative electrode paste comprises the anode material according to any one of claims 1-13.

15. A lithium-ion battery, wherein the lithium-ion battery comprises the anode material according to any one of claims 1-13.
